# EUROPEAN PATENT SPECIFICATION

(11) **EP 1 562 759 B1**
(45) Date of publication and mention of the grant of the patent: **20.12.2006**
(21) Application number: 03809887.7
(22) Date of filing: 30.10.2003
(51) Int. Cl.: B42F 15/00, B42C 7/00

(54) **SUSPENSION FILE AND METHOD FOR THE MANUFACTURE THEREOF**
HÄNGEMAPPE UND VERFAHREN ZU DEREN HERSTELLUNG
DOSSIER SUSPENDU ET PROCEDE DE FABRICATION ASSOCIE

(30) Priority: 30.10.2002 NL 1021784; 08.11.2002 NL 1021876
(43) Date of publication of application: 17.08.2005
(73) Proprietor: Fountain Technologies B.V., 2909 LC Cappelle a/d Ijssel (NL)
(72) Inventor: HOOGLAND, Hendricus, Antonius, NL-1562 ZM Krommenie (NL)
(74) Representative: Winckels, Johannes Hubertus F.
(86) International application number: PCT/NL2003/000743
(87) International publication number: WO 2004/039606

(56) References cited:
- EP-A- 0 375 925
- WO-A-87/01264
- FR-A- 2 070 619
- US-A- 4 400 107
- US-A- 5 815 903
- US-B1- 6 332 285

## Description

The invention relates to a suspension file.

Suspension files are known and are used, for instance, to store paper in drawers and cabinets, such as desk drawers and filing cabinets. These are suitably provided with parallel suspension rails from which the suspension files can be suspended with suspension hooks.

These known suspension files are manufactured from folded cardboard, with two opposing longitudinal edges of the cardboard being provided with a metal or plastic strip projecting on both sides to form the above suspension hooks. Such suspension files are expensive because the metal strips must be provided, while, moreover, they are vulnerable as a result of the cardboard and the connection with the strip.

WO 8701264 discloses a suspension file which is made of plastic material, in one piece. This suspension file has two meshed, relatively open sides interconnected by a living hinge, whereas the opposite sides has folded edges and each two hook elements for suspending said file.

The invention contemplates to provide a suspension file. In particular, the invention contemplates to provide a suspension file which is less vulnerable than the known suspension file and, moreover, is preferably relatively inexpensive in manufacture. These and further objects are at least partly achieved with a suspension file according to the invention.

A suspension file according to the invention is characterized by the features according to claim 1 and is substantially manufactured from plastic. Preferably, a suspension file according to the invention is characterized in that it is injection molded, at least manufactured in a mold in one piece, with hinging means being co-formed, in particular as so-called living hinges. Thus is achieved in one go a suspension file which can be easily folded and can be suspended in a suitably designed arrangement, such as a desk or filing cabinet or the like.

In a suspension file according to the invention, the hook means are preferably designed as extensions of a longitudinal edge of a closing surface, with the longitudinal edge being slightly thicker than the thickness of the closing surfaces. This ensures that the suspension file can easily be suspended, is sufficiently stiff, while the closing surfaces are relatively flexible and, moreover, require little material. In a suspension file according to the invention, the hinging means comprise at least one and preferably more than one living hinge, for instance two or three living hinges extending substantially parallel to each other. Thus a suspension file can easily be adapted in thickness to the matters to be stored therein, such as papers. It is preferred that on at least one side, in particular an outer side of a closing surface, a suspension file is provided with surfaces which can be written on, so that notes can easily be made on the suspension file, for instance concerning the contents thereof.

In a longitudinal edge of a closing surface of a suspension file according to the invention, an insert can easily be included, for instance a metal or plastic stiffening strip, around which plastic is preferably completely or partly injected. Optionally, a transponder may be included as insert, with which the suspension file can be made individually traceable.

A suspension file according to the invention may, for instance, have an opened length between 400 and 550 mm and a width between 270 and 350 mm; such that paper of A4 format can easily be received therein, while the suspension file can be suspended in existing filing cabinets and the like. Of course, these dimensions should in no way be understood as limitative and may be adjusted in accordance with the desired use of the suspension file.

A suspension file according to the invention is preferably substantially injection molded in flat condition, which facilitates manufacture.

The invention further relates to a label holder for a suspension file according to the invention, provided with a clamping profile which can fittingly be clamped to an upper edge of a closing surface.

The invention further relates to a method for manufacturing the suspension file, characterized by the features according to claim 19.

The use of a mold with a mold cavity in which at least one movable wall part of the mold cavity is provided gives the advantage that plastic can be introduced into the mold cavity with relatively little counterpressure, at least a particularly favorable mold flow index (MFI), while during or after the plastic is introduced into the mold cavity, the above movable wall part can be moved to a position in which the desired relatively small wall thickness of at least the closing surfaces is achieved. During this movement, the plastic is displaced by the moving wall part, so that complete filling of the mold cavity is achieved. Thus can be obtained a wall thickness which is not otherwise possible with mold forms without particularly high injection pressures and/or particularly high closing pressures of the mold being necessary.

In a method according to the present invention, the mold may be of such design that the hinging means are substantially formed by the or each movable part. This offers the advantage that during injection of the plastic the hinges as such do not form a flow impediment to the plastic, while relatively thin film hinges, at least living hinges, can be formed.

In a further advantageous embodiment, a method according to the invention is characterized by the features according to claim 22.

In such an embodiment, after injection of the plastic, the closing surfaces are brought to thickness by movement of the or each movable wall part. The wall thickness of the closing surfaces thereby becomes particularly small. An additional advantage of a method according to the invention is that stresses in the plastic and hence in the final product can be controlled very well, can particularly be reduced to a minimum, so that undesirable deformations of the final products are prevented.

In explanation of the invention, exemplary embodiments of a suspension file, label holder and method according to the invention will be elucidated in more detail with reference to the drawing. In this drawing:
Fig. 1 shows, in perspective view, an opened suspension file according to the invention;
Fig. 2 shows, in perspective view, a closed suspension file according to the invention;
Figs. 2A-2E show details of embodiments according to the invention;
Fig. 3 shows, in perspective view, a label holder according to the invention;
Fig. 4 schematically shows, in cross-sectional view, a mold for use of a method according to the invention, in a first embodiment;
Fig. 5 shows, in cross-sectional view, a second embodiment of a mold for use of a method according to the invention;
Fig. 6 shows, in opened and closed condition, a file according to the invention, in an alternative embodiment;
Fig. 7 shows the file of Fig. 6, with filling;
Fig. 8 shows a clamping device for a file according to the invention;
Fig. 9 shows an assembly according to the invention, comprising a box and a number of suspension files;
Fig. 10 schematically shows, in a number of views, suspension files according to the invention, suspended and unfolded; and
Fig. 11 schematically shows, in side view, a part of a file in a further embodiment.

In this specification, similar or corresponding parts have similar or corresponding reference numerals.

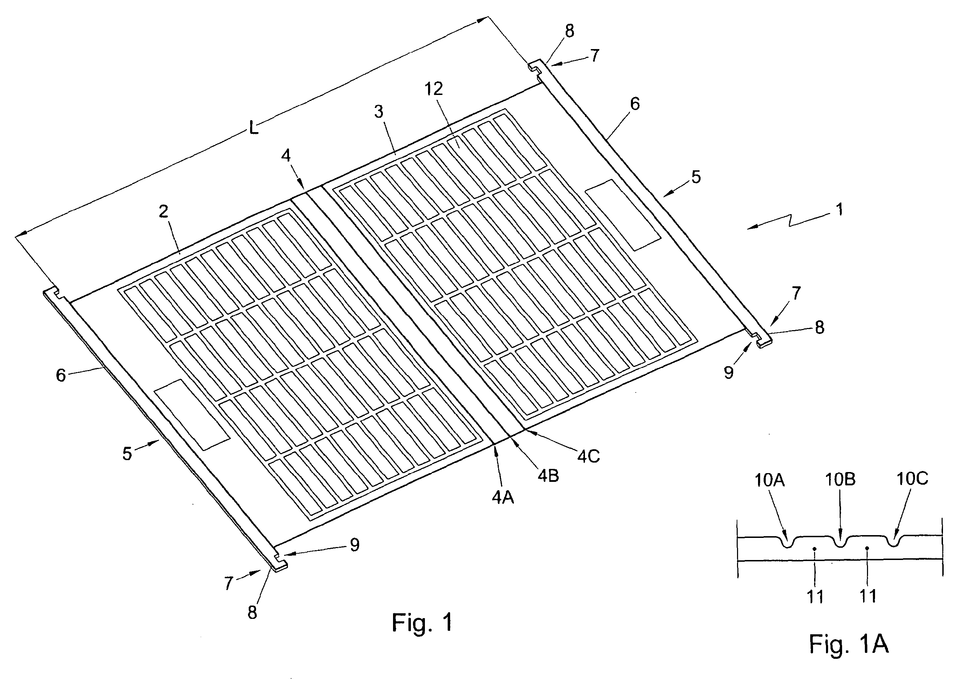

Fig. 1 shows, in unfolded condition, a suspension file 1 according to the invention, comprising a first closing surface 2 and a second closing surface 3, mutually connected by hinging means 4. On the side 5 opposite the hinging means, each closing surface is provided with a thickened longitudinal edge 6, which is provided on both sides with a projecting part 7 forming a hook means 8 with which the suspension file can be suspended in the conventional manner. On the side facing the hinging means 4, each hook means 8 is suitably provided with an appropriate profile 9.

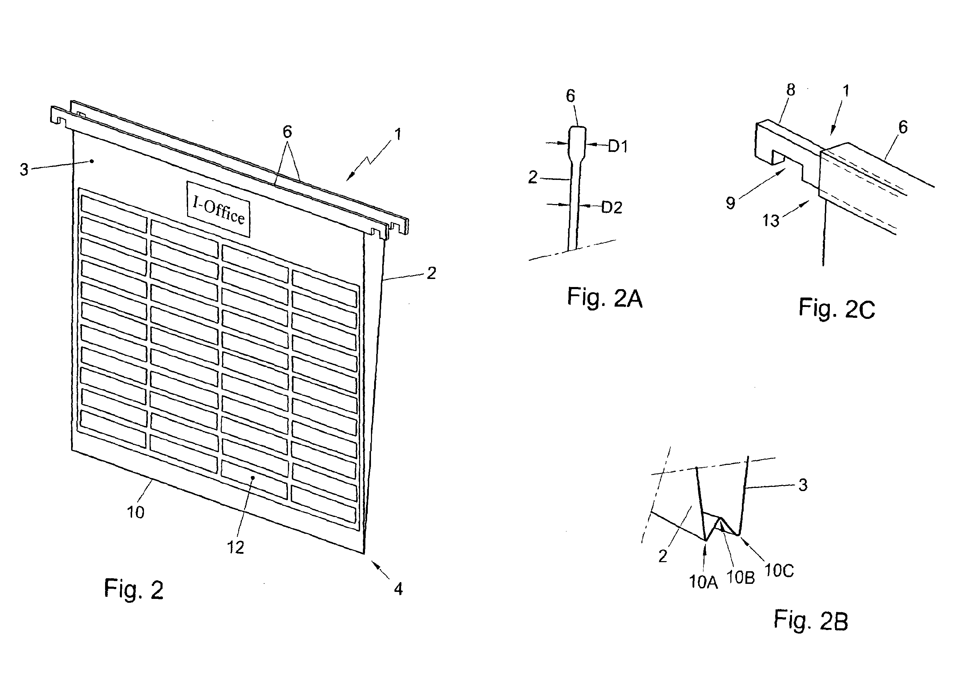

In the embodiment shown in Fig. 1, the hinging means 4 comprise three hinging lines 4A-C extending parallel to each other, which each form a living hinge 10A-C, schematically shown in Fig. 1A in side view. Between the hinging lines 10A, 10B and 10B, 10C, edges 11 are provided. When folding up the suspension file 1, the two closing surfaces 2, 3 can thus be folded against each other, along either the middle folding line 10B or the two outer folding lines 10A, 10C or along all three folding lines. Also, the living hinges 10 may be of such design that the middle living hinge 10B is located on another side than the two other living hinges 10A, 10C, such that the folding direction thereof is opposite. This means that when the suspension file 1 is completely folded up, the two edges 11 will be folded between the two closing surfaces 2, 3, as shown in Fig. 2B.

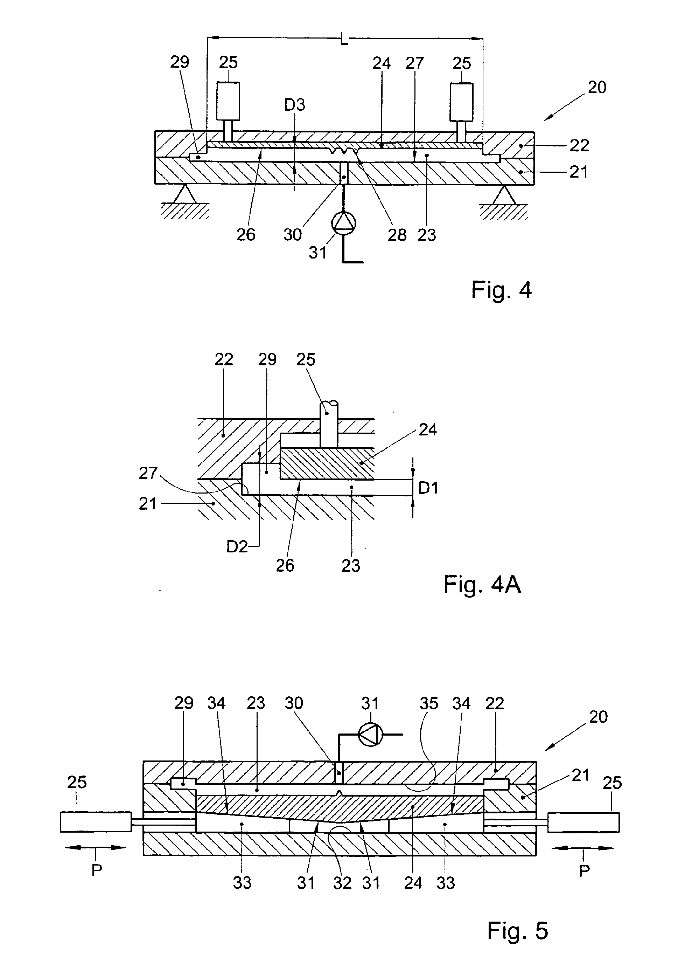

A suspension file 1 as shown in Fig. 1 is injection molded in one piece from plastic, for instance polyethylene, PET, polypropylene or another appropriate plastic in which living hinges can be formed. Of course, mixtures of plastics may also be used. A method therefor will be described below with reference to Figs. 4 and 5.

Fig. 2 schematically shows, in perspective view, a suspension file 1 according to the invention, in substantially folded-up condition, with only one living hinge 10 being used. On the outer side of the second closing surface 3, a number of raised surfaces 12 are arranged in relief in rows and columns. In an alternative embodiment, the surfaces 12 may also be provided by, for instance, in-mold-labeling, or stickers for sticking on thereof may be co-delivered.

As shown, the longitudinal edges 6 are slightly thicker than the rest of the closing surfaces 2, 3. Fig. 2A schematically shows, in cross-sectional side view, an upper part of a closing surface 2, from which it is clear that the longitudinal edge 6 has a greater wall thickness D₁ than the further closing surface 2, the thickness of which is indicated by D₂. The wall thickness D₂ is, for instance, half or a third of the wall thickness D₁. Suitable ratios can easily be selected, for instance on the basis of the used plastic, the dimensions of the suspension file 1, the desired bearing strength of the longitudinal edges 6 and the profile form thereof. Of course, other than the shown rectangular cross-sections may be used.

Fig. 2B schematically shows a lower end of a suspension file 1 according to the invention, in particular hinging means 4 comprising three living hinges 10A-10C. At a greater load on the suspension file 1, the two closing surfaces 2, 3 will be moved farther apart to provide more space.

Fig. 2C schematically shows a part of a longitudinal edge 6 of a suspension file 1, in which the hook means 8 are formed by the end of a strip 13, which is included in the longitudinal edge 6 as insert, for instance a metal or plastic strip. The plastic is flowed around the strip, leaving clear the above hook means 8. This easily enables further increase in bearing strength.

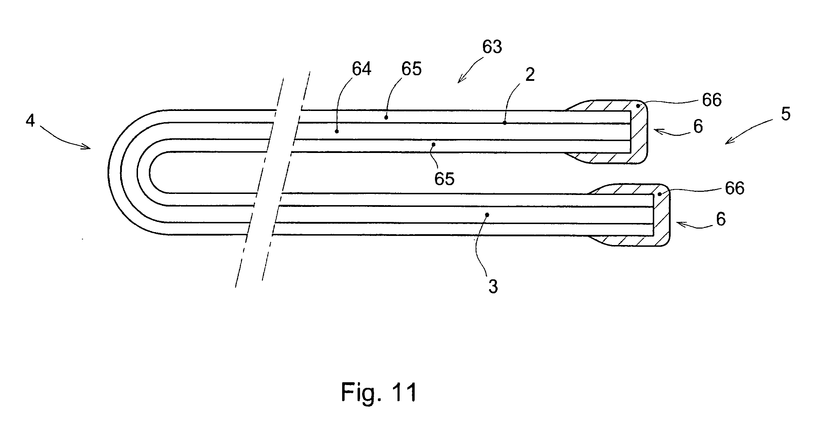

Fig. 2D shows, in side view, a part of an upper edge of a suspension file 1 according to the invention. The side walls 2, 3 are formed by a plastic sheet, for instance extruded or injection molded. This sheet may also be designed as shown in Fig. 11. The upper longitudinal edge 70 of each side wall 2, 3 is provided with a row of lips 71 between which recesses 72 are provided. The longitudinal edge 70 thereby resembles a row of battlements. The edge 6 is, for instance, injection molded and connected with the sheet, at least the side walls 2, 3, by the above lips 71. The sheet may be fixed against the edge 6, for instance by gluing, welding or the like. Preferably, the edge 6 is injection molded around the lips with an apparatus and method to be described below. The edge is preferably slightly bent, such that when cooling an eventually substantially straight edge 6 is obtained. The sheet from which the side walls are formed may be slightly stretched previous to injection molding, so that the length thereof, in stretched condition, substantially corresponds with the length of the edge 6 immediately after injection molding, with the sheet assuming its original length again on shrinkage of the edge. This method is also usable in other embodiments, but the use of the row of battlements 70 gives the advantage that fewer stresses occur and the sheet is more easily kept flat.

Fig. 2E shows, in side view, an advantageous embodiment of the edges 6 with a part of the side walls 2, 3. The edges 6 are formed as hollow profiles, which may lie against and/or over each other and are relatively stiff at relatively small wall thicknesses. The wall thicknesses of the profiles are preferably relatively regular and everywhere equal, so that a regular shrinkage is obtained when cooling. The profiles may be extruded, but are preferably injection molded. In the shown exemplary embodiment, a first edge 6 is formed by a slightly U-shaped profile 73 pointing down with the legs. A long leg 76 is provided at the lower end with an edge 75 in which a longitudinal edge 70 of a side wall 3 is attached, for instance by gluing, welding, co-injection molding, pressing or the like. Optionally, the longitudinal edge 70 may be formed as shown in Fig. 2D. The other edge 6 is formed by a second profile 74 having a substantially L-shaped cross-section, with the long leg 77 pointing down. The lower edge 75 thereof is provided with a profile in which or against which the upper longitudinal edge 70 of the side wall 2 is attached, in a manner described before. The short leg 78 of the profile 74 may rest on the upper surface 79 of the other profile 73. These profiles are, through their form, relatively stiff and dimensionally stable, while, in cooperation, they lead to a good closure and, moreover, greater stiffness. Optionally, the profiles 73, 74 may be provided with cooperating locking means, such as projections, holes, lips, clicking edges and the like, for a still better closure.

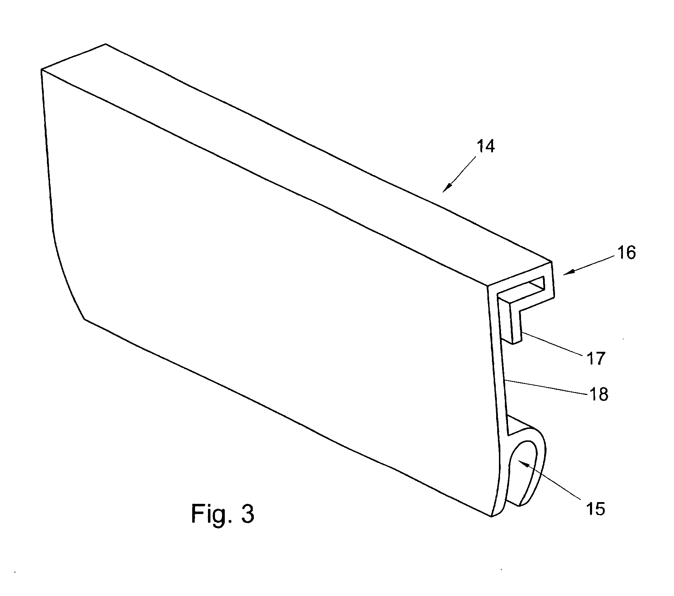

Fig. 3 shows a label holder 14 according to the invention, for instance formed from an extruded profile, provided with a clamping profile 15, which can clampingly be clamped to the longitudinal edge 6 of the suspension file 1, while the opposite longitudinal edge 16 is bent over, such that an edge 17 thereof extends approximately parallel to a body part 18, at which the edge 16 and the clamping profile 15 are provided. Between the edge 17 and the body 18, for instance, a paper may be slid on which text can be provided.

Fig. 4 shows a first embodiment of a mold 20 for use of a method according to the invention for the manufacture of a suspension file 1. This mold 20 comprises a first stationary closing part 21 and a second movable closing part 22. Between the closing parts 21, 22, a mold cavity 23 is formed, which is at least partly bounded by a movable wall part 24, for instance a plate suspended in the mold cavity 23 by means of piston-cylinder assemblies 25. Fig. 4 shows the plate 24 in a withdrawn position, such that the mold cavity 23 has a relatively large volume. Between the side 26 of the plate 24 facing the mold cavity 23 and the opposite wall 27 of the first mold part 21, a relatively great distance D₃ is provided, in the shown embodiment greater than the thickness D₂ of the longitudinal edges 6. In the middle of the plate 24, three ribs 28 are provided with which the living hinges can be formed. The length L of the plate 24 corresponds with the distance L between the longitudinal edges 6, in the unfolded position shown in Fig. 1. On both sides of the plate 24, parts 29 forming the longitudinal edge are provided. In the first mold part 21, a feed opening 30 is provided through which, by means of injection molding means, schematically shown in Fig. 4 as a pump 31, plastic can be introduced into the mold cavity 23. Because the distance D₃ is relatively great, the plastic can be introduced into the mold cavity 23 with relatively little pressure, the flow path being relatively limited, so that a particularly advantageous MFI is obtained.

After bringing the plastic, sufficient to form the suspension file 1, into the mold cavity 23, with the mold in the position shown in Fig. 4, the feed opening 30 is preferably closed, and the plate 24 is moved forward by means of the piston-cylinder assemblies 25 to a slid-forward position, as partly schematically shown in Fig. 4A. It is clear that the distance between the plate 24 and the opposite wall 27 is reduced to the wall thickness D₁ of the two closing surfaces 2, 3, while the distance D₂ from part 29 forming the edge part has remained equal. Plastic is pushed away by the plate 24 into the parts 29 forming the longitudinal edge. Thus, complete filling of the mold cavity 23 is obtained, the closing surfaces 2, 3 being particularly small, in particular smaller than the MFI of the complete flow path from the inlet opening 30 into the longitudinal edge 6 when normally injection molding without movable wall part 24. Moreover, this enables reduction of the stress in the wall parts. Besides, the living hinges 10 are simultaneously formed by the ribs 28.

Fig. 5 schematically shows an alternative embodiment of a mold 20 according to the invention, a movable wall part 24 in the form of a slide being provided in the fixed mold part 21. The inlet opening for the plastic is provided in the movable part 22. Of course, this may also be conversely designed. In this embodiment, the side of the slide 24 facing away from the mold cavity 23 is provided with two oppositely inclined surfaces 31 opposite a flat running surface 32. Between the running surface 32 and the inclined surfaces 31 are provided wedges 33 with complementary inclined surfaces 31. The wedges 33 are movable in the direction P by means of piston-cylinder assemblies 25. It will be clear that when moving the wedges 33 toward each other, the plate 24 will be brought to a slid-forward position, that is to say will be moved in the direction of the opposite surface 35 of the mold cavity 23. With such a mold 20, the wall thickness of the closing surfaces 2, 3 can, in a manner described before, be reduced to the desired wall thickness D₁, while during injection of the plastic the distance between the slide 24 and the opposite surface 35 can be relatively great, for instance a multiple of the above wall thickness D₁, so that the plastic can be brought into the mold cavity with relatively little pressure. Moreover, the use of the wedges 33 very easily enables movement of the slide 24, with little force.

In an advantageous embodiment, the slide or plate 24 is, in a method according to the invention, moved so rapidly that adiabatic heat development occurs in the plastic, so that the flow behavior of the plastic is advantageously affected.

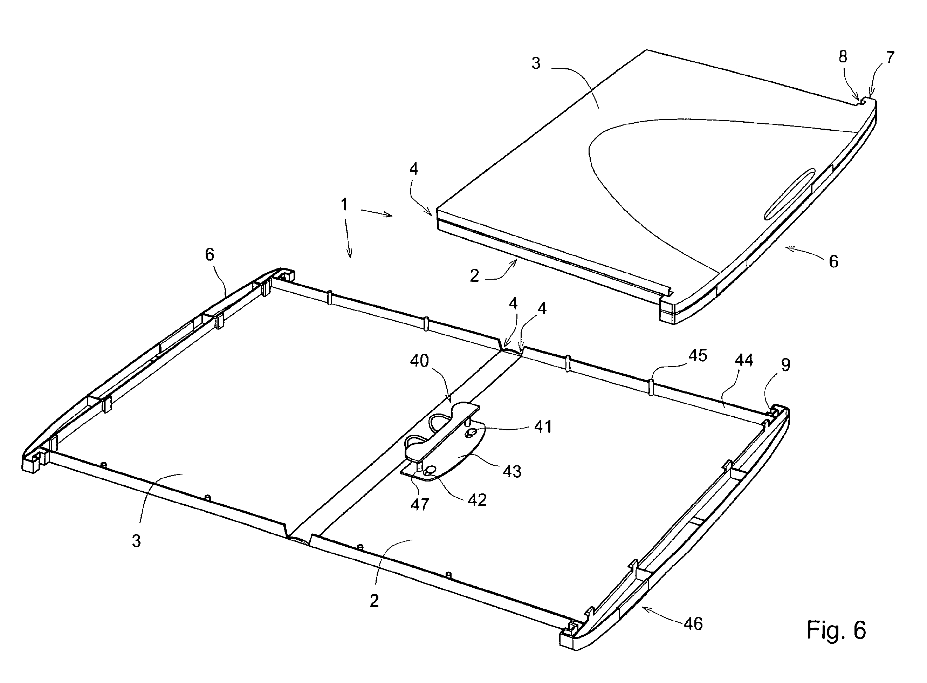

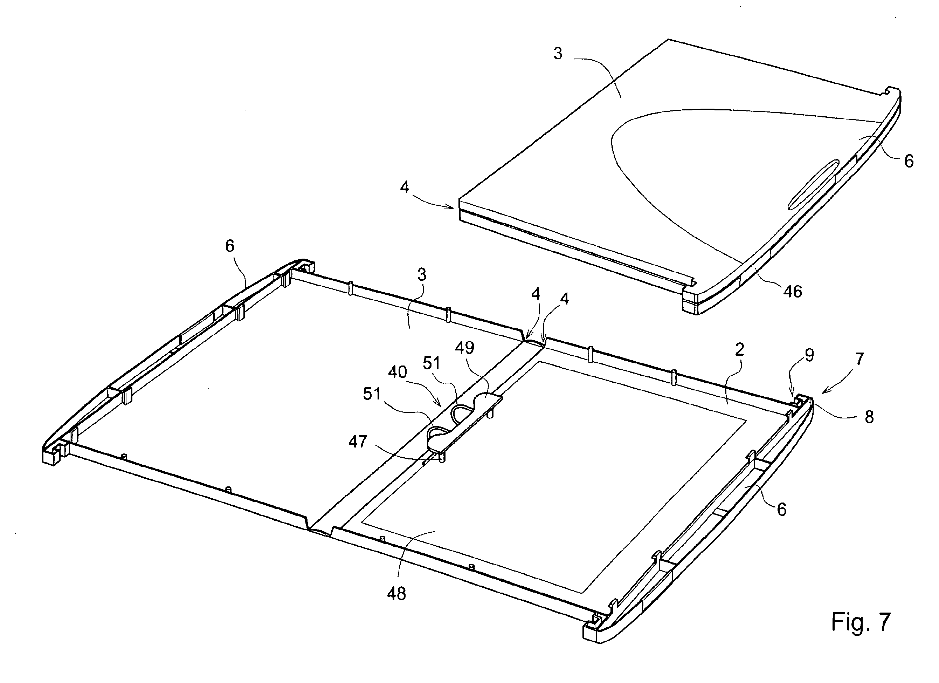

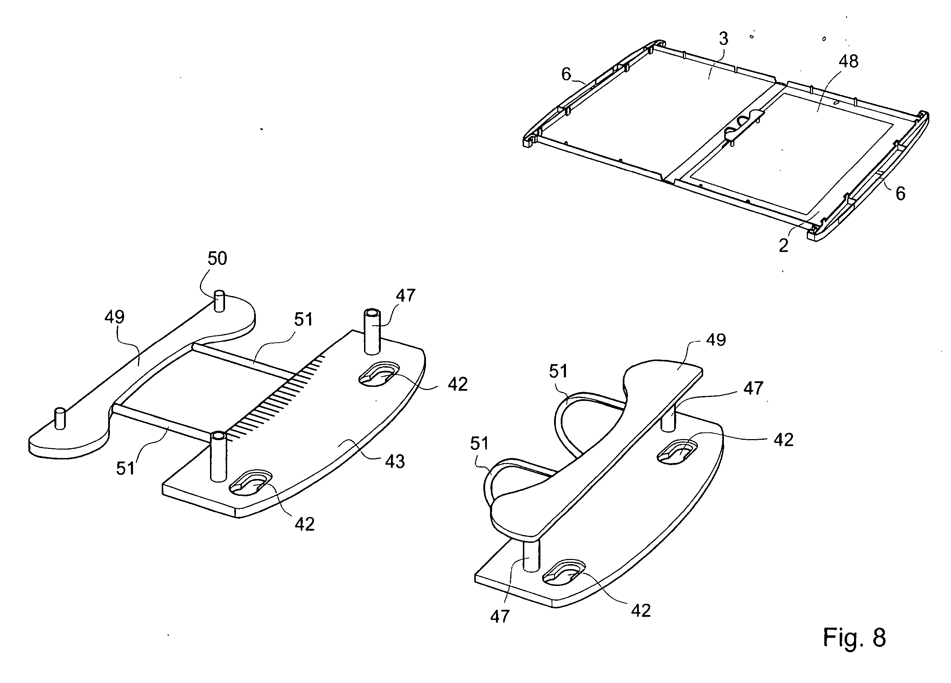

Figs. 6 and 7 show, in opened and closed condition, a file 1 according to the invention, which is provided with closing surfaces 2, 3 which may be relatively stiff. Hook elements 8 are co-formed in one piece in partly hollow longitudinal edges 6. The hinging means 4 comprise two parallel hinges 4. Near one of the hinges 4, a clamping element 40 is attached to a closing surface 2 by means of slightly mushroom-shaped pins 41 fitting into openings 42 in a base element 43 of the clamping element 40. The clamping element 40 is shown in more detail in Fig. 8.

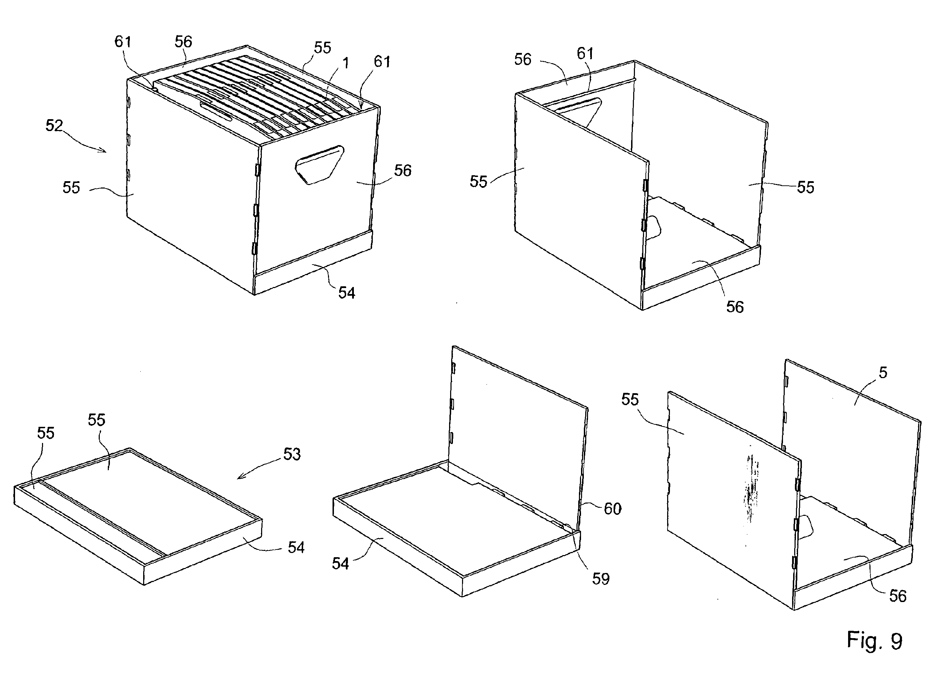

In this embodiment, each closing surface 2, 3 is provided with a raised edge 44 between the hinges 4 and the longitudinal edge 6. In the closed condition of the suspension file 1, as shown above in Figs. 8 and 9, these edges 44 fall against and partly over each other, to close an inner space of the suspension file 1. Pins 45 are provided to ensure good closure. In the longitudinal edge 6, a transparent window 46 may be included behind which an identification plate or the like can be inserted. Furthermore, closing means (not shown) may be provided to keep the suspension file closed.

As shown in Fig. 7, sheets of paper 48 or the like may be put on pins 47 of the clamping element 40.

Fig. 8 shows a clamping element 40 in an advantageous embodiment. This comprises a base element 43 with openings 42 having a keyhole form. Arranged on the base element 43 are hollow pins 47, while via elastic, flexible arms 51 a closing surface 49 is connected with the base element 43. On the closing surface 49, pins 50 are provided which clampingly fit into the hollow pins 47, so that the closing surface is fixed on the base element 43, optionally enclosing the paper. The base element 43 may be slid with the openings 42 over the pins 41, for attachment purpose. If desired, this may be designed so as to be detachable.

Fig. 9 shows an assembly 52 according to the invention, comprising a box 53 and a series of suspension files 1, for instance according to the invention. The box 53 can partly be folded or set up and comprises, in the shown embodiment, a tray-shaped bottom part 54 and two pairs of side walls 55, 56 pivotable relative thereto. In the shown example, the side walls are connected with the bottom part 54 via living hinges, but may also be loosely placeable thereon. Fig. 9 shows, in five steps, the setting up and filling of the box 52, from bottom left counterclockwise. A stack of suspension files 1 is placed in the bottom part 54, after which the side walls 55, 56 are folded thereover. The two long side walls 55 are set up, as are the short side walls 56. Fitting fingers 59 and holes 60 are provided to couple the walls 55, 56. In the short walls 56, on the side facing inward, ledges 61 or the like are provided, so formed and dimensioned that the suspension files 1 can be suspended therefrom with the hook means 8, as shown in Fig. 9 top left. This results in an assembly which can serve both for storage and transport of folded suspension files and for suspending suspension files in, for instance, a cabinet, drawer or the like. A box according to the invention may, of course, be manufactured from any material, such as cardboard or the like, but is preferably manufactured in one piece from plastic. In an assembly according to the invention, regular cardboard suspension files may also be included.

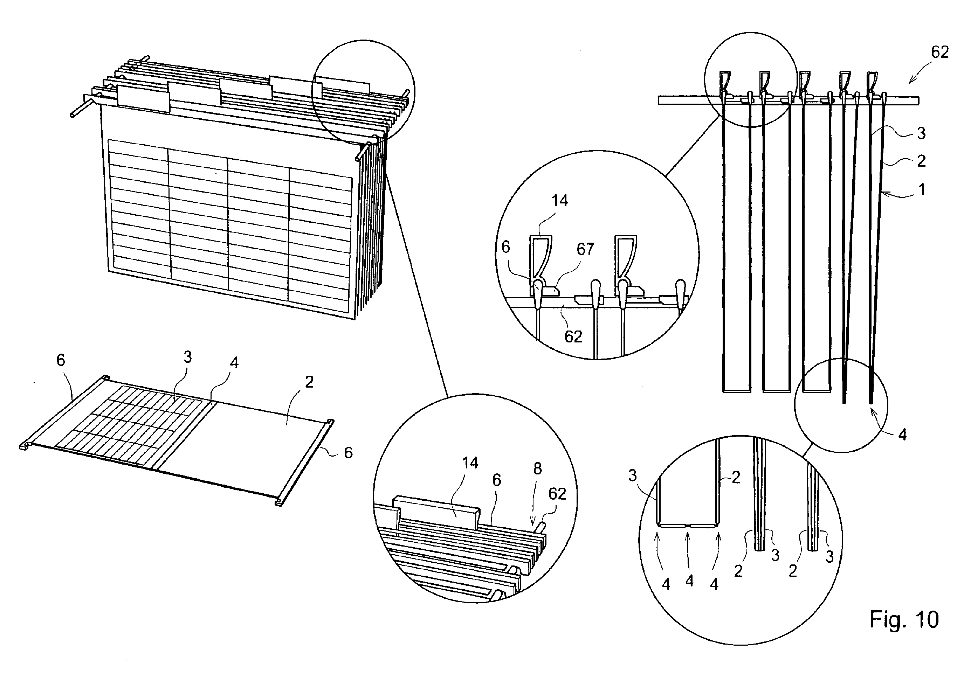

Fig. 10 shows, in a number of views, a suspension file 1, in opened and in closed condition, suspended from rails 62.

Fig. 11 shows a part of a suspension file 1 according to the invention, in a further alternative embodiment. In particular, an end 5 with a longitudinal edge 6 of a closing surface 2, 3 is shown. In this embodiment, the closing surfaces 2, 3 are manufactured as an at least partly plastic sheet 63, laminated in the shown embodiment. For instance, a middle sheet 64 of cardboard, paper, plastic or the like, optionally provided with images, text or the like and two-sidedly provided with a transparent cover layer 65. The sheet is folded to form the hinging means 4. At the end 5, a longitudinal edge 6 is provided by, for instance, gluing a strip 66 thereon. Preferably, the strip is formed by injection molding technique using the laminate 63 as insert. Alternatively, the strip 66 may also be fixed by heat sealing, after it has been manufactured, for instance, by injection molding. A design as shown in Fig. 11 is, for instance, advantageous because of relatively low cost, appearance or the like.

In a suspension file 1 according to the invention, the longitudinal edge 6, at least a strip 66 and/or a closing surface 2, 3, may be provided, near the longitudinal edge 6, with a projection 67 or the like, which can rest on a rod 62. This can prevent the suspension files 1 from tilting and standing, at least hanging crooked. Optionally, such a projection may also be provided on the label holder 14.

The invention is in no way limited to the exemplary embodiments shown in the specification and drawing. Many variations thereof are possible within the scope of the invention defined by the claims.

For instance, the longitudinal edges 6 may have other profiles, for instance partly open on one side, as in the form of a U-profile or I-profile. Also, several movable wall parts 24 may be provided, which may be moved successively or simultaneously, while, moreover, movement of the movable wall parts is possible during insertion of the plastic, which may be advantageous if the plastic must be kept moving during injection, so as to prevent premature solidification. Other inserts may be provided as well, for instance transponders with which the suspension files can become electronically traceable. It will be clear that all combinations of different parts and features of the shown embodiments also fall within the scope of protection of the claims.

A mold according to the invention may also be of vertical design. The hinging means may be designed as film hinge.

These and many comparable variations are considered to fall within the scope of the invention defined by the claims.

## Claims

1. A suspension file for use in drawers and the like, comprising two closing surfaces, mutually connected on a first side by hinging means, in which, on the side facing away from the hinging means, each closing surface is provided with hook means for suspending the suspension file, which suspension file is manufactured in one piece from plastic **characterized in that** each closing surface is provided with a thickened longitudinal edge opposite said hinging means, and the longitudinal edges are thicker than the rest of the closing surfaces.

2. A suspension file according to claim 1, wherein the suspension file is manufactured by injection molding, at least mold forming, with the hinging means being integrated as living hinges.

3. A suspension file according to claim 1 or 2, wherein the hook means are designed as extensions of a longitudinal edge of a closing surface, which longitudinal edge is thicker than the thickness of the closing surfaces.

4. A suspension file according to any one of the preceding claims, wherein the hinging means comprise at least one living hinge.

5. A suspension file according to claim 4, wherein the hinging means comprise at least two and preferably at least three living hinges extending parallel to each other.

6. A suspension file according to any one of the preceding claims, wherein on at least one side, in particular on at least one outer side of a closing surface, a profile is provided in which surfaces are included which can be written on.

7. A suspension file according to any one of the preceding claims, wherein in at least the longitudinal edge of each closing surface where the hook means are provided at least one insert is provided, around which plastic is at least partly and preferably completely injected.

8. A suspension file according to any one of the preceding claims, wherein in flattened, opened condition the suspension file measured at right angles to the hinging means has a length between 400 and 550 mm and a width between 270 and 350 mm, which width is measured between the hook means

9. A suspension file according to any one of the preceding claims, wherein the suspension file is injection molded in substantially flat condition.

10. A suspension file according to any one of the preceding claims further comprising a label holder, wherein the label holder is provided with a clamping profile which can fittingly be clamped to an upper edge of a closing surface.

11. A suspension file according to any one of the preceding claims, wherein at least one of the and preferably each of the closing surfaces is provided with a raised edge, which raised edges, when closing the suspension file, fall against or over each other to enclose a space located between the closing surfaces, at least articles, in particular sheets, received therein during use.

12. A suspension file according to claim 11, wherein closing means are provided to keep the suspension file in closed condition.

13. A suspension file according to any one of the preceding claims, wherein the suspension file is provided with a clamping element with which papers and the like can be fixed in the suspension file.

14. A suspension file according to claim 13, wherein the clamping element is detachably connected with the suspension file.

15. A suspension file according to claim 13 or 14 further comprising a clamping element, which clamping element is provided with a base element with at least one fastening element with which the clamping element is fixable on a closing surface of a suspension file, said base element being connected with a closing element which, during use, can be arranged on a side of a stack of paper or the like to be received in the clamping element, which side is located opposite the base element.

16. An assembly of at least one suspension file according to any one of the preceding claims and a box in which the suspension file or suspension files can be packaged in flat condition, which box is foldable to a position in which the or each suspension file can be suspended from two opposing wall parts of the box, in particular with the hook means.

17. An assembly according to claim 16, wherein the box has a tray-shaped lower part, to which, on at least two opposing sides, side wall parts are attached, are preferably pivotably connected therewith, which side wall parts, when the box is closed, extend over at least the tray-shaped part and suspension files received therein and, when the box is open, extend above the tray-shaped part such that the suspension files can be suspended therefrom.

18. An assembly according to claim 16 or 17, wherein the box is manufactured in one piece, in particular by a mold-forming technique.

19. A method for manufacturing the suspension file according to any one of claims 1-15 by means of a mold in which a mold cavity with at least one movable wall part is provided, wherein plastic is brought into the mold cavity while said at least one movable wall part has been or is brought into a withdrawn position in which, during and/or after introducing the plastic into the mold cavity, said at least one movable wall part is brought to a moved-forward position, while displacing the plastic so as to result in complete filling of the mold cavity.

20. A method according to claim 19, wherein said at least one movable wall part is so designed as to form the hinging means.

21. A method according to claim 19 or 20, wherein, during manufacture with said at least one movable wall part, at least the wall thickness of the two closing surfaces is at least partly reduced, in particular to less than matching the mold flow index for the respective closing surface.

22. A method according to any one of claims 19-21, wherein the two closing surfaces are provided with a thickened longitudinal edge opposite the hinging means, wherein during manufacture the plastic is brought into the mold cavity while over the whole closing surfaces of the suspension file a space is provided for a wall thickness which corresponds with the wall thickness of the two longitudinal edges, while subsequently the at least one movable wall part is moved such that the wall thickness of the closing surfaces between the hinging means and the respective longitudinal edges is reduced, preferably to less than half the wall thickness of the respective longitudinal edges.

23. A method for packaging suspension files according to anyone of claims 1-15, wherein the suspension files are stacked on each other in a box, which box has been or is provided with at least two side wall parts which are attached or fixable to a tray-shaped lower part of the box, such that these two wall parts extend above said tray-shaped part, and that the suspension files can be suspended therefrom.

24. A method according to claim 23, wherein the suspension files are stacked in said tray-shaped part and, subsequently, the side wall parts are laid thereover.

## Patentansprüche

1. Hängemappe zur Verwendung in Schubladen und dergleichen, die zwei Verschlussflächen aufweist, die auf einer ersten Seiten über Scharniereinrichtungen miteinander verbunden sind, und bei der auf der den Scharniereinrichtungen abgewandten Seite jede Verschlussfläche mit Hakeneinrichtungen zum Aufhängen der Hängemappe versehen ist, wobei die Hängemappe einstückig aus Kunststoff gefertigt ist,
**dadurch gekennzeichnet, dass**
jede Verschlussfläche einen verdickten Längsrand gegenüber den Scharniereinrichtungen aufweist und die Längsränder dicker sind als der Rest der Verschlussflächen.

2. Hängemappe nach Anspruch 1, wobei die Hängemappe durch Spritzgießen, zumindest durch Formen, hergestellt ist, wobei die Scharniereinrichtungen in Form von Filmscharnieren integriert sind.

3. Hängemappe nach Anspruch 1 oder 2, bei der die Hakeneinrichtungen als Verlängerungen eines Längsrands einer Verschlussfläche ausgebildet sind, wobei der Längsrand dicker ist als die Dicke der Verschlussflächen.

4. Hängemappe nach einem der vorhergehenden Ansprüche, bei der die Scharniereinrichtungen mindestens ein Filmscharnier aufweisen.

5. Hängemappe nach Anspruch 4, bei der die Scharniereinrichtungen mindestens zwei und vorzugsweise mindestens drei Filmscharniere aufweisen, die parallel zueinander verlaufen.

6. Hängemappe nach einem der vorhergehenden Ansprüche, bei der auf mindestens einer Seite, insbesondere mindestens einer Außenseite einer Verschlussfläche ein Profil vorgesehen ist, das Flächen aufweist, die beschrieben werden können.

7. Hängemappe nach einem der vorhergehenden Ansprüche, bei der zumindest in dem Längsrand jeder Verschlussfläche, an dem die Hakeneinrichtungen vorgesehen sind, mindestens ein Einsatz angeordnet ist, um den herum Kunststoff zumindest teilweise und vorzugsweise vollständig gespritzt ist.

8. Hängemappe nach einem der vorhergehenden Ansprüche, wobei im flachgelegten geöffneten Zustand die rechtwinklig zu den Scharniereinrichtungen gemessene Hängemappe eine Länge zwischen 400 und 550 mm und eine Breite zwischen 270 und 350 mm aufweist, wobei die Breite zwischen den Hakeneinrichtungen gemessen ist.

9. Hängemappe nach einem der vorhergehenden Ansprüche, wobei die Hängemappe in im Wesentlichem flachem Zustand spritzgegossen ist.

10. Hängemappe nach einem der vorhergehenden Ansprüche, ferner mit einem Etikettenhalter mit einem Klemmprofil, das passend an einem oberen Rand einer Verschlussfläche angeklemmt werden kann.

11. Hängemappe nach einem der vorhergehenden Ansprüche, bei der mindestens eine und vorzugsweise jede Verschlussfläche einen erhabenen Rand aufweist, wobei die erhabenen Ränder beim Schließen der Hängemappe gegeneinander oder aufeinander fallen, um einen Raum zwischen den Verschlussflächen zu umschließen, in dem bei Benutzung zumindest Artikel, insbesondere Blätter aufgenommen sind.

12. Hängemappe nach Anspruch 11, bei der Verschlusseinrichtungen vorgesehen sind, um die Hängemappe in geschlossenem Zustand zu halten.

13. Hängemappe nach einem der vorhergehenden Ansprüche, wobei die Hängemappe ein Klemmelement aufweist, mit dem Papiere und dergleichen in der Hängemappe befestigt werden können. -

14. Hängemappe nach Anspruch 13, bei der das Klemmelement lösbar mit der Hängemappe verbunden ist.

15. Hängemappe nach Anspruch 13 oder 14, ferner mit einem Klemmelement, das ein Basiselement mit mindestens einem Befestigungselement aufweist, mit dem das Klemmelement an einer Verschlussfläche einer Hängemappe befestigbar ist, wobei das Basiselement mit einem Verschlusselement verbunden ist, das bei Benutzung auf einer Seite eines Papierstapels oder dergleichen angeordnet sein kann, um in dem Klemmelement aufgenommen zu werden, wobei sich diese Seite gegenüber dem Basiselement befindet.

16. Anordnung aus mindestens einer Hängemappe nach einem der vorhergehenden Ansprüche und einem Kasten, in den die Hängemappe oder die Hängemappen in flachem Zustand gepackt werden können, wobei der Kasten in eine Position faltbar ist, in der die oder jede Hängemappe an zwei einander gegenüberliegenden Wandteilen des Kastens aufgehängt werden kann, und zwar insbesondere mit der Hakeneinrichtung.

17. Anordnung nach Anspruch 16, bei der der Kasten einen ablagekastenförmigen unteren Teil aufweist, an dem zumindest auf zwei einander gegenüberliegenden Seiten Seitenwandteile angebracht und vorzugsweise schwenkbar mit diesen verbunden sind, wobei die Seitenwandteile sich bei geschlossenem Kasten zumindest über den ablagekastenförmigen Teil und die darin aufgenommenen Hängemappen erstrecken und sich bei geöffnetem Kasten derart über den ablagekastenförmigen Teil erstrecken, dass die Hängemappen von diesen herabhängen können.

18. Anordnung nach Anspruch 16 oder 17, bei der der Kasten einstückig ausgebildet ist, insbesondere durch Anwendung einer Formtechnik.

19. Verfahren zum Herstellen der Hängemappe nach einem der Ansprüche 1-15 mittels einer Form, in der ein Formhohlraum mit mindestens einem bewegbaren Wandteil vorgesehen ist, bei dem Kunststoff in den Formhohlraum eingeleitet wird, wobei der mindestens eine bewegbare Wandteil in eine zurückgezogene Position gebracht wird oder worden ist, in der bei und/oder nach dem Einleiten von Kunststoff in den Formhohlraum der mindestens eine bewegbare Wandteil in eine vorwärtsbewegte Position gebracht wird, wobei der Kunststoff verschoben wird, um den Formhohlraum vollständig auszufüllen.

20. Verfahren nach Anspruch 19, bei dem der mindestens eine Wandteil derart ausgebildet wird, dass er die Scharniereinrichtungen bildet.

21. Verfahren nach Anspruch 19 oder 20, bei dem bei der Herstellung mit dem mindestens einen bewegbaren Wandteil zumindest die Dicke der beiden Verschlussflächen zumindest teilweise reduziert wird, insbesondere auf einen Wert, der kleiner ist als der, der dem Mold Flow Index der jeweiligen Verschlussfläche entspricht.

22. Verfahren nach einem der Ansprüche 19-21, bei dem die beiden Verschlussflächen mit einem verdickten Längsrand gegenüber den Scharniereinrichtungen versehen werden und bei dem bei der Herstellung der Kunststoff in den Formhohlraum eingebracht wird, wobei über den gesamten Verschlussflächen der Hängemappe ein Raum für eine Wanddicke vorgesehen ist, die der Wanddicke der beiden Längsränder entspricht, wobei anschließend der mindestens eine Wandteil derart bewegt wird, dass die Wanddicke der Verschlussflächen zwischen den Scharniereinrichtungen und den jeweiligen Längsrändern reduziert wird, und zwar vorzugsweise auf weniger als die Hälfte der Wanddicke der jeweiligen Längsränder.

23. Verfahren zum Packen von Hängemappen nach einem der Ansprüche 1-15, bei dem die Hängemappen in einem Kasten aufeinandergestapelt werden, wobei der Kasten mit mindestens zwei Seitenwandteilen versehen ist oder wird, die an einem ablagekastenförmigen unteren Teil des Kasten derart angebracht oder befestigbar sind, dass sich diese beiden Wandteile über den ablagekastenförmigen Teil erstrecken und dass die Hängemappen von diesen herabhängen können.

24. Verfahren nach Anspruch 23, bei dem die Hängemappen in dem ablagekastenförmigen Teil gestapelt werden und anschließend die Seitenwandteile darüber gelegt werden.

## Revendications

1. Dossier suspendu destiné à être utilisé dans des tiroirs et équivalents, comprenant deux surfaces de fermeture, raccordées l'une à l'autre sur un premier côté par des moyens de charnière, dans lequel, sur le côté faisant face à l'opposé des moyens de charnière, chaque surface de fermeture est pourvue de moyens de crochet pour suspendre le dossier suspendu, lequel dossier suspendu est fabriqué d'une seule pièce en matière plastique, **caractérisé en ce que** chaque surface de fermeture est pourvue d'un bord longitudinal épaissi opposé auxdits moyens de charnière, les bords longitudinaux étant plus épais que le reste des surfaces de fermeture.

2. Dossier suspendu selon la revendication 1, dans lequel le dossier suspendu est fabriqué par moulage par injection, ou du moins par formage par moulage, les moyens de charnière étant intégrés en tant que charnières actives.

3. Dossier suspendu selon la revendication 1 ou 2, dans lequel les moyens de crochet sont conçus en tant que prolongements d'un bord longitudinal d'une surface de fermeture, lequel bord longitudinal est plus épais que l'épaisseur des surfaces de fermeture.

4. Dossier suspendu selon l'une quelconque des revendications précédentes, dans lequel les moyens de charnière comprennent au moins une charnière active.

5. Dossier suspendu selon la revendication 4, dans lequel les moyens de charnière comprennent au moins deux et de préférence trois charnières actives s'étendant de façon parallèle l'une par rapport à l'autre.

6. Dossier suspendu selon l'une quelconque des revendications précédentes, dans lequel sur au moins un côté, en particulier sur au moins un côté extérieur d'une surface de fermeture, il est prévu un profil dans lequel sont incluses des surfaces sur lesquelles il est possible d'écrire.

7. Dossier suspendu selon l'une quelconque des revendications précédentes, dans lequel il est prévu au moins un insert dans au moins le bord longitudinal de chaque surface de fermeture où sont prévus les moyens de crochet, la matière plastique étant au moins partiellement et de préférence entièrement injectée autour de l'insert.

8. Dossier suspendu selon l'une quelconque des revendications précédentes, dans lequel dans une disposition ouverte, à plat, le dossier suspendu mesuré au droit des moyens de charnière, a une longueur comprise entre 400 et 550 mm et une largeur comprise entre 270 et 350 mm, laquelle largeur est mesurée entre les moyens de crochet.

9. Dossier suspendu selon l'une quelconque des revendications précédentes, dans lequel le dossier suspendu est moulé par injection dans une disposition essentiellement à plat.

10. Dossier suspendu selon l'une quelconque des revendications précédentes, comprenant en outre un porte-étiquette, dans lequel le porte-étiquette est pourvu d'un profil de serrage qui peut être convenablement serré à un bord supérieur d'une surface de fermeture.

11. Dossier suspendu selon l'une quelconque des revendications précédentes, dans lequel au moins une et de préférence chacune des surfaces de fermeture est pourvue d'un bord surélevé, les bords surélevés, lors de la fermeture du dossier suspendu, retombant chacun les uns contre les autres ou les uns par-dessus les autres de manière à enclore un espace situé entre les surfaces de fermeture, au moins certains articles, en particulier des feuilles, étant reçus dans cet espace lors de l'utilisation.

12. Dossier suspendu selon la revendication 11, dans lequel des éléments de fermeture sont agencés pour maintenir le dossier suspendu dans une disposition fermée.

13. Dossier suspendu selon l'une quelconque des revendications précédentes, dans lequel le dossier suspendu est pourvu d'un élément de serrage, par lequel des papiers et équivalents peuvent être fixés dans le dossier suspendu.

14. Dossier suspendu selon la revendication 13, dans lequel l'élément de serrage est raccordé de façon amovible au dossier suspendu.

15. Dossier suspendu selon la revendication 13 ou 14 comprenant en outre un élément de serrage, lequel élément de serrage est pourvu d'un élément de base doté d'au moins un élément de fixation par lequel l'élément de serrage peut être fixé à une surface de fermeture d'un dossier suspendu, ledit élément de base étant raccordé avec un élément de fermeture qui, lors de l'utilisation, peut être agencé sur un côté d'une pile de papiers ou autres pour être accueilli dans l'élément de serrage, lequel côté étant situé à l'opposé de l'élément de base.

16. Ensemble constitué d'au moins un dossier suspendu selon l'une quelconque des revendications précédentes et d'une boîte dans laquelle le dossier suspendu ou les dossiers suspendus peut ou peuvent être emballé(s) dans une disposition à plat, laquelle boîte est pliable dans une position dans laquelle le ou chaque dossier suspendu peut être suspendu à deux parties de paroi opposées de la boîte, en particulier par les moyens de crochet.

17. Ensemble selon la revendication 16, dans lequel la boîte comporte une partie inférieure en forme de plateau à laquelle, sur au moins deux côtés opposés, des parties de parois latérales sont fixées, sont de préférence raccordées de façon pivotante avec celle-ci, lesquelles parties de parois latérales, quand la boîte est fermée, s'étendent au moins au-dessus de la partie en forme de plateau et des dossiers suspendus reçus dans celle-ci et, quand la boîte est ouverte, s'étendent au-dessus de la partie en forme de plateau de telle sorte que les dossiers suspendus peuvent être suspendus à celle-ci.

18. Ensemble selon la revendication 16 ou 17, dans lequel la boîte est fabriquée d'une seule pièce, en particulier par une technique de formage par moulage.

19. Procédé de fabrication d'un dossier suspendu selon l'une quelconque des revendications 1-15 au moyen d'un moule, dans lequel une cavité de moule comprenant au moins une partie de paroi mobile est prévue, dans lequel on alimente la cavité de moule en matière plastique pendant que ladite au moins une partie de paroi mobile a été ou est mise dans une position retirée, dans lequel, durant et/ou après l'introduction de la matière plastique dans la cavité de moule, on amène ladite au moins une partie de paroi mobile dans une position déplacée vers l'avant, pendant le déplacement de la matière plastique, de sorte à obtenir le remplissage complet de la cavité de moule.

20. Procédé selon la revendication 19, dans lequel au moins une partie de paroi mobile est conçue de manière à former les moyens de charnière.

21. Procédé selon la revendication 19 ou 20, dans lequel, durant la fabrication avec ladite au moins une partie de paroi mobile, au moins l'épaisseur de paroi des deux surfaces de fermeture est au moins réduite en partie, en particulier à une épaisseur dont la valeur est inférieure à l'indice de fluidité à chaud de la surface de fermeture respective.

22. Procédé selon l'une quelconque des revendications 19-21, dans lequel les deux surfaces de fermeture sont pourvues d'un bord longitudinal épaissi opposé aux moyens de charnière, dans lequel durant la fabrication on alimente la cavité de moule en matière plastique alors qu'au-dessus de l'ensemble des surfaces de fermeture du dossier suspendu un espace est prévu pour avoir une épaisseur de paroi qui correspond à l'épaisseur de paroi des deux bords longitudinaux, tandis que par la suite on déplace au moins une partie de paroi mobile de telle façon que l'épaisseur de paroi des surfaces de fermeture entre les moyens de charnière et les bords longitudinaux respectifs est réduite, de préférence à une valeur inférieure à la moitié de l'épaisseur de paroi des bords longitudinaux respectifs.

23. Procédé d'emballage de dossiers suspendus selon l'une quelconque des revendications 1-15, dans lequel les dossiers suspendus sont empilés les uns sur les autres dans une boîte, laquelle boîte a été ou est pourvue d'au moins deux parties de parois latérales qui sont fixées ou fixables à une partie inférieure, en forme de plateau, de la boîte, de telle façon que ces deux parties de parois s'étendent au-dessus de ladite partie en forme de plateau, et que les dossiers suspendus peuvent être suspendus à celle-ci.

24. Procédé selon la revendication 23, dans lequel les dossiers suspendus sont empilés dans ladite partie en forme de plateau et, par la suite, les parties de parois latérales sont couchées par dessus celle-ci.
